# EUROPEAN PATENT APPLICATION

(11) **EP 4 559 883 A1**
(43) Date of publication of application: **28.05.2025**
(21) Application number: 23211414.0
(22) Date of filing: 22.11.2023
(51) Int. Cl.: C04B 18/06, C04B 26/10, C04B 26/16, C08G 18/00, C08G 18/32, C08G 18/38, C08G 18/78, C08G 18/79, C08K 3/34, C08L 75/02, C09J 175/02

(54) **POWDERED RECYCLED MATERIALS AS FILLERS FOR MULTI-COMPONENT CHEMICAL FASTENING SYSTEMS BASED ON ISOCYANATE-AMINE ADDUCTS**

(71) Applicant: Hilti Aktiengesellschaft, 9494 Schaan (LI)
(72) Inventor: Kumru, Memet-Emin, 86199 Augsburg (DE); Plenk, Christian, 86916 Kaufering (DE); Gnaß, Beate, 86368 Gersthofen (DE); Wenzel, Antje, 86928 Hofstetten (DE)
(74) Representative: Hilti Aktiengesellschaft Corporate Intellectual Property

(57) **Abstract**

A multi-component resin system comprising at least one isocyanate component and at least one amine component, wherein the isocyanate component comprises at least one aliphatic and/or aromatic polyisocyanate having an average NCO functionality of 2 or higher, wherein the amine component comprises at least one amine reactive to isocyanate groups having an average NH functionality of 2 or higher, characterized in that the isocyanate component and/or the amine component comprises at least one powdered recycled material.

## Description

The present invention relates to a multi-component resin system for preparing a mortar composition based on isocyanate-amine adducts for chemical fastening of structural elements containing powdered recycled material as filler. Furthermore, the present invention relates to the use of powdered recycled material to improve the recycling rate of a such a multi-component system.

### Background

Over the last few years, it has become increasingly important in the construction industry to improve the carbon dioxide balance in order to protect the climate. For the production of chemical products, especially chemical dowels, raw materials are taken from nature and disposed of as waste after use. During the processing of the raw materials to the end product, carbon dioxide is constantly released, which is harmful to the climate.

For each product, a so-called CO₂ carbon footprint (CFP) can be determined, which describes its CO₂ balance. The CFP of a product is usually determined as part of a life cycle assessment in accordance with ISO 14040/14044. The use of recycled raw materials usually improves the CO₂ footprint of a product.

In principle, the use of recycled materials reduces the use of native raw materials. A high proportion of recycled materials therefore protects the environment. The reduced consumption of resources can be quantified simply by stating the so-called recycling rate. This value describes the percentage by weight of a product that consists of recycled material. Since mixed raw materials or chemical compounds can also consist of native and recycled materials, the mass proportion that was actually reused is always taken as the basis.

### Summary of the Invention

There is therefore a need for raw materials that can be used to manufacture chemical dowels without releasing climate-damaging CO₂ and that do not compete with food production. To achieve this, the multi-component systems used to manufacture the chemical dowels should have the highest possible recycling rate. The use of appropriate recycling materials should have as little influence as possible on the load values to be achieved with the chemical dowel. In order to take the aspect of sustainability into account, a reduced performance is acceptable.

The above object underlying the present invention has been surprisingly solved by a multi-component resin system comprising at least one isocyanate component and at least one amine component, wherein the isocyanate component comprises at least one aliphatic and/or aromatic polyisocyanate having an average NCO functionality of 2 or higher, wherein the amine component comprises at least one amine reactive to isocyanate groups having an average NH functionality of 2 or higher, characterized in that the isocyanate component and/or the amine component comprises at least one powdered recycled material.

The present invention also relates to a method of chemically fixing structural elements in drilled holes, wherein a mortar composition or a multi-component resin system according to the present invention is used for chemical fixing.

Furthermore, the present invention is related to the use of a mortar composition or a multi-component resin system according to the present invention for improving the CO₂ footprint of a chemical anchor. Finally, the present invention relates to the use of a powdered recycled material in a multi-component system according to the present invention to increase the recycling rate thereof.

Generally, it has surprisingly been shown that by using powdered recycled materials, chemical dowels can be produced that have an improved recycling rate. The CO₂ balance of corresponding multi-component systems for the production of chemical dowels is significantly more favorable than the CO₂ balance of known mortar compounds used as chemical dowels. Since the powdered recycled materials used are waste products, the raw materials used according to the invention do not compete with food production. The chemical dowels produced from the multi-component system according to the invention show an acceptable load level.

Further embodiments of the present invention are described in the following detailed description and the appended claims.

### Detailed Description of the Invention

As outlined above, the present invention provides a multi-component resin system comprising at least one isocyanate component (A) and at least one amine component (B),
wherein the isocyanate component (A) comprises at least one aliphatic and/or aromatic polyisocyanate having an average NCO functionality of 2 or higher,
wherein the amine component (B) comprises at least one amine reactive to isocyanate groups having an average NH functionality of 2 or higher,
   characterized in that
the isocyanate component (A) and/or the amine component (B) comprises at least one powdered recycled material.

In the context of the present invention, the terms used herein and in the following description have the following meanings:
- *"powdering"* denotes converting a coarse-grained or solid substance into a powder or granules. Preferably, the transfer takes place via the process of comminution or grinding. However, it is also possible to achieve pulverization, for example, via a combustion process. The powder preferably has a particle size of less than 1 mm, whereby the particle size can be determined by means of sieve analysis. In cases where the recycled material already occurs as powder or granules during its production or preparation, pulverization can be dispensed with.
- *"Recycled material*" means a waste material which is converted by a preparation process into a valuable material which can be used as a filler of a mortar mass. In the sense of the present invention, the preparation process is realized by pulverization.
- *"Recycling rate"* is the percentage by weight of recycled material in the isocyanate component or in the amine component based on the total weight of a multi-component system. It is also possible to specify the recycling rate for the isocyanate component or the amine component. In this case, the total weight of the isocyanate component or the amine component is selected as the reference point for the calculation.
- *"Multi-component resin system"* means a reactive resin system comprising several components stored separately from each other, generally the isocyanate component and the amine component, so that curing occurs only after all components have been mixed.
- *"Isocyanates"* are compounds that have a functional isocyanate group -N=C=O and are characterized by the structural unit R-N=C=O.
- *"Polyisocyanates"* are compounds that have at least two functional isocyanate groups -N=C=; diisocyanates, which are also covered by the definition of polyisocyanate, are characterized, for example, by the structure O=C=N-R-N=C=O and thus have an NCO functionality of 2.
- *"Average NCO functionality*" describes the number of isocyanate groups in the compound; in the case of a mixture of isocyanates, the "averaged NCO functionality' describes the averaged number of isocyanate groups in the mixture and is calculated according to the formula: averaged NCO functionality (mixture) = I average NCO functionality (isocyanate i) / nᵢ, i.e. the sum of the average NCO functionality of the individual components divided by the number of individual components.
- *"Isocyanate component (A)"* is a component of the multi-component resin system which comprises at least one polyisocyanate and optionally at least one filler and/or at least one rheology additive and/or further additives.
- *"Amines"* are compounds which have a functional NH group, are derived from ammonia by replacing one or two hydrogen atoms with hydrocarbon groups and have the general structures RNH₂ (primary amines) and R₂NH (secondary amines) (see: IUPAC Compendium of Chemical Terminology, 2nd ed. (the "Gold Book"), compiled by A. D. McNaught and A. Wilkinson, Blackwell Scientific Publications, Oxford (1997)). The compound class of polyaspartic acid esters is explicitly excluded from the term amines in the context of the present inventions. These are defined separately under the term polyaspartic acid esters.
- *"NH functionality*" describes the number of active hydrogen atoms that can react with an isocyanate group in an amino group.
- *"Average NH functionality*" describes the number of active hydrogen atoms that can react with an isocyanate group in an amine and results from the number and NH functionality of the amino groups contained in the compound, i.e. the amine; in the case of a mixture of amines, the "averaged NH functionality' describes the average number of active hydrogen atoms in the mixture and is calculated according to the formula: averaged NH functionality (mixture) = I average NH functionality (amine i) / nᵢ, i.e. the sum of the average NH functionality of the individual components divided by the number of individual components.
- *"Polyaspartic acid esters"* refers to compounds of the general formula: 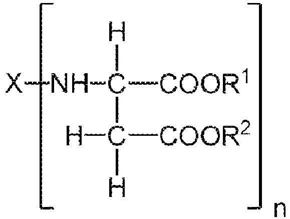 in which
   R¹ and R² can be the same or different and represent an organic group which is inert to isocyanate groups,
   X represents an n-valent organic group which is inert to isocyanate groups, and
   n represents an integer of at least 2, preferably from 2 to 6, more preferably from 2 to 4 and particularly preferably 2.
- *"Amine component (B)"* is a component of the multi-component resin system which comprises at least one amine and optionally at least one filler and/or at least one rheology additive and/or further additives.
- *"Isocyanate amine adducts"* are polymers that are formed by the polyaddition reaction of isocyanates with amines. The isocyanate amine adducts according to the invention are preferably polyureas which comprise at least one structural element of the form [-NH-R-NH-NH-R'-NH-].
- *"Aliphatic compounds"* are acyclic or cyclic, saturated or unsaturated carbon compounds, excluding aromatic compounds.
- *"Cycloaliphatic compounds"* or *"alicyclic compounds"* are compounds having a carbocyclic ring structure, excluding benzene derivatives or other aromatic systems.
- *"Araliphatic compounds"* are aliphatic compounds having an aromatic backbone such that, in the case of a functionalized araliphatic compound, a functional group that is present is bonded to the aliphatic rather than the aromatic part of the compound.
- *"Aromatic compounds"* are compounds which follow Hückel's rule (4n+2).
- *"Mortar composition"* refers to the composition that is obtained by mixing the isocyanate component and the amine component and as such can be used directly for chemical fastening.
- *"Filler"* refers to an organic or inorganic, in particular inorganic, compound.
- *"Rheology additive"* refers to additives which are able to influence the viscosity behavior of the isocyanate component, the amine component and the multi component resin system during storage, application and/or curing. The rheology additive prevents, inter alia, sedimentation of the fillers in the polyisocyanate component and/or the amine component. It also improves the miscibility of the components and prevents possible phase separation.
- *"Temperature resistance"* refers to the change in the bond stress of a cured mortar composition at an elevated temperature compared with the reference bond stress. In the context of the present invention, the temperature resistance is specified in particular as the ratio of the bond stress at 80°C to the reference stress.
- The terms "a" or "an" as articles preceding a chemical compound class mean that one or more compounds falling under that chemical compound class may be meant. In a preferred embodiment, these articles mean only a single compound, the term *"at least one"* means numerically "one *or more".* In a preferred embodiment, the term numerically means "one", the terms *"include"* and *"comprising"* mean that there may be other components in addition to those mentioned. These terms are meant inclusively and therefore include *"consisting of'. "Consisting of'* is meant conclusively and means that no further constituents may be present. In an embodiment, the terms *"comprise"* or *"comprising"* mean *"consisting of',* a range delimited by numbers, e.g., *"from 80 °C to 120 °C"* means that the two corner values and each value within that range are individually disclosed.

As stated above, the present invention relates in one embodiment to a multi-component resin system material. *"Multi-component'* systems in the sense of the present invention contain several components stored separately from each other, so that curing of the ingredients contained in the components occurs only after all the components have been mixed together. In particular, the multi-component resin system material according to the invention contains at least one component (A) comprising at least one hardenable isocyanate resin, and at least one further component (B) comprising a hardening agent for the isocyanate resin of component (A). In a preferred embodiment, the multi-component resin system according to the invention is a two-component resin system. Thus, in one embodiment, the present invention relates to a multi-component resin system as defined above in the form of a two-component resin system consisting of components (A) and (B).

Preferably, the multi-component resin system of the present invention is free of any polyaspartic acid ester. It is also essential that the multi-component resin system, and in particular the amine component (B) of the multi-component resin system, is free from polyaspartic esters. The term *"free* of *polyaspartic acid esters"* as used in the present application means that the proportion of polyaspartic acid esters in the multi-component resin system is preferably less than 2 wt.-%, more preferably less than 0.5 wt.-% and even more preferably less than 0.1 wt.-%, in each case based on the total weight of the multi-component resin system. The presence of polyaspartic acid esters in the above weight percentage ranges can be attributed to potential impurities. Particularly preferably, however, the percentage of polyaspartic acid esters in the multi-component resin system is 0.0 wt.-% based on the total weight of the multi-component resin system.

In another preferred embodiment of the present invention, the total filling ratio of a mortar mass prepared by mixing the isocyanate component (A) and the amine component (B) is in a range of 25 to 85%, preferably 35 to 75%, most preferably 45 to 65%, based on the total weight of the multi-component resin system.

Preferably, the multi-component resin system according to the present invention has a recycling rate of at least 1.3 wt.-%, preferably at least 2.5 wt.-%, more preferably at least 7 wt.-%, and most preferably at least 15 wt.-%, based on the total weight of the multi-component resin system.

### Isocyanate Component (A)

The multi-component resin system according to the invention comprises at least one isocyanate component (A) and at least one amine component (B) B. Before use, the isocyanate component (A) and the amine component (B) are provided separately from one another in a reaction-inhibiting manner.

The isocyanate component (A) comprises at least one polyisocyanate. All aliphatic and/or aromatic isocyanates known to a person skilled in the art and having an average NCO functionality of 2 or more, individually or in any mixtures with one another, can be used as the polyisocyanate. The average NCO functionality indicates how many NCO groups are present in the polyisocyanate. Polyisocyanate means that two or more NCO groups are contained in the compound.

Suitable aromatic polyisocyanates are those having aromatically bound isocyanate groups, such as diisocyanatobenzenes, toluene diisocyanates, diphenyl diisocyanates, diphenylmethane diisocyanates, diisocyanatonaphathalenes, triphenylmethane triisocyanates, but also those having isocyanate groups that are bound to an aromatic group via an alkylene group, such as a methylene group, such as bis- and tris (isocyanatoalkyl) benzenes, toluenes and xylenes.

Preferred examples of aromatic polyisocyanates are: 1,3-phenylene diisocyanate, 1,4 phenylene diisocyanate, 2,4-toluylene diisocyanate, 2,5-toluylene diisocyanate, 2,6-toluylene diisocyanate, 1,3-xylylene diisocyanate, 1,4-xylylene diisocyanate, tetramethyl-1,3-xylylene diisocyanate, tetramethyl-1,4-xylylene diisocyanate, 1,3 bis(isocyanatomethyl)benzene, 1,4-bis(isocyanatomethyl)benzene, ethylphenyl diisocyanate, 2-dodecyl-1,3-phenylene diisocyanate, 2,4,6-triisopropyl-m-phenylene diisocyanate, 2,4,6-trimethyl-1,3-phenylene diisocyanate, 1,5 naphthylene diisocyanate, 3,3'-dimethyl-4,4'-biphenyl diisocyanate, 3,3'-dimethoxy-4,4' biphenyl diisocyanate, diphenylene methane 2,4'-diisocyanate, diphenylene methane-2,2'-diisocyanate, diphenylene methane-4,4' diisocyanate, triphenylmethane-4,4',4"-triisocyanate, 5-(p-isocyanatobenzyl)-2-methyl m-phenylene diisocyanate, 4,4-diisocyanato-3,3,5,5-tetraethyldiphenylmethane, 5,5' ureylene di-o-tolyl diisocyanate, 4-[(5-isocyanato-2-methylphenyl)methyl]-m-phenylene diisocyanate, 4-[(3-isocyanato-4-methylphenyl)methyl]-m-phenylene diisocyanate, 2,2' methylene-bis[6-(o-isocyanatobenzyl)phenyl] diisocyanate.

Aliphatic isocyanates which have a carbon backbone (without the NCO groups contained) of 3 to 30 carbon atoms, preferably 4 to 20 carbon atoms, are preferably used. Examples of aliphatic polyisocyanates are bis(isocyanatoalkyl) ethers or alkane diisocyanates such as methane diisocyanate, propane diisocyanates, butane diisocyanates, pentane diisocyanates, hexane diisocyanates (e.g. hexamethylene diisocyanate, HDI), heptane diisocyanates (e.g. 2,2-dimethylpentane-1,5-diisocyanate), octane diisocyanates, nonane diisocyanates (e.g. trimethyl HDI (TMDI), usually as a mixture of the 2,4,4- and 2,2,4-isomers), 2-methylpentane-1,5-diisocyanate (MPDI), nonane triisocyanates (e.g. 4-isocyanatomethyl-1,8-octane diisocyanate, 5 methylnonane diisocyanate), decane diisocyanates, decane triisocyanates, undecane diisocyanates, undecane triisocyanates, dodecane diisocyanates, dodecane triisocyanates, 1,3- and 1,4-bis-(isocyanatomethyl)cyclohexane (H6XDI), 3 isocyanatomethyl-3, 5, 5- tri methylcyclohexyl isocyanate(isophoroned i isocyanate, I PD I), bis-(4-isocyanatocyclohexyl)methane (H12MDI), bis-(isocyanatomethyl)norbornane (NBDI), 3(4)-isocyanatomethyl-1-methyl-cyclohexyl isocyanate (IMCI), octahydro-4,7 methano-1H-indenedimethyl diisocyanate, norbornene diisocyanate, 5-isocyanato-1-(isocyanatomethyl)-1,3,3-trimethylcyclohexane, ureylene-bis(p-phenylenemethylene-p phenylene)diisocyanate.

Particularly preferred isocyanates are hexamethylene diisocyanate (HDI), trimethyl HDI (TMDI), pentane diisocyanate (PDI), 2-methylpentane-1,5-diisocyanate (MPDI), 3-isocyanatomethyl-3,5,5-trimethylcyclohexylisocyanate (isophorone diisocyanate; IPDI), 1,3- and 1,4-bis-(isocyanatomethyl)cyclohexane (HeXDI), bis-(isocyanatomethyl)norbornane (NBDI), 3(4)-isocyanatomethyl-1-methyl cyclohexyl isocyanate (IMCI) and/or 4,4'-bis(isocyanatocyclohexyl)methane (H12MDI) or mixtures of these isocyanates.

Even more preferably, the polyisocyanates are present as prepolymers (preferably homopolymers), biurets (preferably diisoxyanate-biuret-additionproducts), isocyanurates, iminooxadiazinediones, uretdiones and/or allophanates, which can be produced by oligomerizing difunctional isocyanates as described above or by reacting the isocyanate compounds as described above with polyols or polyamines, individually or as a mixture, and which have an average NCO functionality of 2 or more. Preferably, the average NCO functionality is in the range of from 2.5 to 5.5., more preferably 2.7 to 4.0, and most preferably 2.9 to 3.6.

Examples of suitable, commercially available isocyanates are Desmodur^{®} N 3900, Desmodur^{®} N 100, Desmodur^{®} N 3200, Desmodur^{®} N 3300, Desmodur^{®} ultra N 3600, Desmodur^{®} N 3700, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551, Desmodur^{®} XP 2838, Desmodur^{®} XP 2840, Desmodur^{®} N3500, Desmodur^{®} NZ 300, Desmodur^{®} E 30600, Bayhydur XP 2547, Bayhydur XP 2451/1, Bayhydur Ultra 307 Desmodur^{®} VL, Desmodur^{®} VL 50, Desmodur^{®} VL 51, Desmodur^{®} ultra N 3300, Desmodur^{®} eco N 7300, Desmodur^{®} E23, Desmodur^{®} E XP 2727, Desmodur^{®} E 2863 XP, Desmodur^{®} H, Desmodur^{®} VKS 20 F, Desmodur^{®} 44V20I, Desmodur^{®} 44P01, Desmodur^{®} 44V70 L (jeweils erhältlich von Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (jeweils erhältlich von Vencorex), Basonat HB 100, Basonat HI 100, Basonat HI 100 NG, Basonat HI 2000 NG (jeweils erhältlich von BASF), Takenate 500, Takenate 600, Stabio D-376N (jeweils erhältlich von Mitsui), Duranate 24A-100, Duranate TPA-100, Duranate THA-100 (jeweils erhältlich von Asahi Kasai), Coronate HXR, Coronate HXLV, Coronate HX, Coronate HK (all available from Tosoh).

One or more polyisocyanates are contained in the isocyanate component (A) preferably in a proportion of from 20 to 100 wt.-%, more preferably in a proportion of from 30 to 90 wt.-% and even more preferably in a proportion of from 35 to 65 wt.-%, based on the total weight of the isocyanate component (A).

Preferably, the degree of filling of the isocyanate component (A) is 20 to 80 wt.-%, more preferably 60 to 70 wt.-%, in each case based on the total weight of the isocyanate component (A) and the amine component (B), respectively.

### Amine Component (B)

The amine component (B), which is provided separately from the isocyanate component (A) in the multi-component resin system in a reaction-inhibiting manner, comprises at least one amine which is reactive to isocyanate groups and has an average NH functionality of 2 or more.

According to a preferred embodiment, the amine which is reactive to isocyanate groups is selected from the group consisting of aliphatic, alicyclic, araliphatic and aromatic amines, particularly preferably from the group consisting of alicyclic and aromatic amines.

Examples of suitable amines which are reactive to isocyanate groups are given below, but without restricting the scope of the invention. These can be used either individually or in any mixtures with one another. Examples are: 1,2 diaminoethane(ethylenediamine), 1,2-propanediamine, 1,3-propanediamine, 1,4-diaminobutane, 2,2-dimethyl-1,3-propanediamine (neopentanediamine), diethylaminopropylamine (DEAPA), 2-methyl-1,5-diaminopentane, 1,3-diaminopentane, 2,2,4- or 2,4,4-trimethyl-1,6-diaminohexane and mixtures thereof (TMD), 1,3-bis(aminomethyl)-cyclohexane, 1,2-bis(aminomethyl)cyclohexane, hexamethylenediamine (HMD), 1,2- and 1,4-diaminocyclohexane (1,2-DACH and 1,4-DACH), bis(4-amino-3-methylcyclohexyl)methane, diethylenetriamine (DETA), 4-azaheptane-1,7-diamine, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis(3-aminopropyl)methylamine, triethylenetetramine (TETA), tetraethylenepentamine (TEPA), pentaethylenehexamine (PEHA), 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornane diamine), dimethyldipropylenetriamine, dimethylaminopropyl-aminopropylamine(DMAPAPA), 2,4-diamino-3,5-dimethylthiotoluene (dimethylthiotoluene diamine DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 3-aminomethyl-3,5,5-trimethylcyclohexy amine (isophorone diamine (IPDA)), diaminodicyclohexylmethane (PACM), diethylmethylbenzenediamine (DETDA), 3,3'-diaminodiphenylsulfone (33 dapsone), 4,4'-diaminodiphenylsulfone (44 dapsone), mixed polycyclic amines (MPCA) (e.g. Ancamine 2168), dimethyldiaminodicyclohexylmethane (Laromin C260), 2,2-bis(4-aminocyclohexyl)propane, (3(4),8(9)bis(aminomethyldicyclo[5.2.1.02, 6]decane (mixture of isomers, tricyclic primary amines; TCD diamine), methylcyclohexyl diamine (MCDA), N,N'-diaminopropyl-2 methyl-cyclohexane-1,3-diamine, N,N'-diaminopropyl-4-methylcyclohexane-1,3 diamine, N-(3-aminopropyl)cyclohexylamine, and 2-(2,2,6,6-tetramethylpiperidin-4 yl)propane-1,3-diamine, 2-methylpentandiamine (e.g. DYTEK^{®} A), N-ethylaminopiperazine (N-EAP), N-aminoethyl-piperazine (N-AEP), 2,4,6-trimethyl-m-phenylendiamine, 2,4,6-tri(propan-2-yl)benzol-1,3-diamine, 4-ethyl-2,6-di(propan-2-yl)benzol-1,3-diamine, 4-methyl-2,6-di(propan-2-yl)benzol-1,3-diamine, 2,5-bis(methylsulfonyl)-1,4-benzoldiamine, chlorodiethylmethylbenzoldiamine (e.g. 5-chloro-4,6-diethyl-2-methyl-1,3-benzoldiamine, 5-chloro-4,6-diethyl-6-methyl-1,3-benzoldiamine), 4-fluoro-5-(1-methylethyl)-1,2-benzoldiamine, 4,4'-methylen-bis[N-(1-methylpropyl)phenylamin], 4,4'-methylenbis(2,6-diethylaniline) (MBDA), 4,4'-methylenbis(N-sec-butylcyclohexanamine) (z.B. Clearlink^{®} 1000), 4,4'-methylen-bis[N-(1-methylpropyl)-3,3'-dimethylcyclohexaneamine] (z.B. Clearlink^{®} 3000), 4,4'-methylen-bis(3-chloro-2,6-diethylaniline) (MBCDA), the reaction product of 2-propenenitrile with 3-amino-1,5,5-trimethylcyclohexanmethanamine (e.g. Jefflink^{®} 745), 3-((3-(((2-cyanoethyl)amino)methyl)-3,5,5-trimethylcyclohexyl)amino)propiononitrile (e.g. Jefflink^{®} 136 or Baxxodur^{®} PC136), N,N'-di-sec-butyl-p-phenylendiamine, 2,4,6-trimethyl-m-phenylendiamine and 2,4,6-trimethyl-5-nitro-1,3-benzoldiamine as well as mixtures of two or more of these amines.

Particularly preferred amines are diethylmethylbenzenediamine (DETDA, such as Ethacure^{®} 100 Plus), 2,4-diamino 3,5-dimethylthiotoluene (dimethylthio-toluenediamine, DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 4,4'-methylene-bis[N (1-methylpropyl)phenylamine] (such as Unilink^{®} 4200), 4,4'-methylenebis(2,6-diethylaniline) (MBDA), 4,4'-methylenebis(N sec-butylcyclohexanamine) (Clearlink@ 1000), 3,3'-diaminodiphenylsulfone (33 dapsone), 4,4'-diaminodiphenylsulfone (44 dapsone), N,N'-di-sec-butyl-p phenylenediamine (such as Unilink^{®} 4100), and 2,4,6-trimethyl-m-phenylenediamine, 4,4'-methylenebis(N-(1 methylpropyl)-3,3'-dimethylcyclohexanamine (Clearlink@ 3000), the reaction product of 2-propenenitrile with 3-amino-1,5,5-trimethylcyclohexanemethanamine (Jefflink@ 745), 3-((3-(((2-cyanoethyl)amino)methyl)-3,5,5-trimethylcyclohexyl)amino)propiononitrile (Jefflink@ 136 or Baxxodur@ PC136), a mixture of DETDA and IPDA (e.g. Ethacure^{®} 270), a mixture of 4,4'-methylenebis(N-sec-butylaniline), 4,4'-methylenebis(2,6-diethylaniline) and diethylmethylbenzoldiamine (e.g. Ethacure^{®} 520), 4,4'-methylene-bis(3-chloro-2,6-diethylaniline) (MBCDA), chlorodiethylmethylbenzoldiamine (e.g. 5-chloro-4,6-diethyl-2-methyl-1,3-benzoldiamine, 5-chloro-4,6-diethyl-6-methyl-1,3-benzoldiamine), Aradur^{®} 223, Aradur^{®} 33225, Ancamide^{®} 506, Ancamine^{®} 2167, Ancamide^{®} 2426, Ancamide^{®} 3011, Ancamide^{®} 3419, Amicure^{®} IC-322, Epilox^{®}-Hardener H 14-50, Epilox^{®}-Hardener H15-60, Epilox^{®}-Hardener M1148, EPIKURE Curing Agent 3050, EPIKURE Curing Agent F205, Ethacure^{®} 300, Ethacure^{®} 100 Plus.

Most particularly preferred amines are 4,4'-methylene-bis[N-(1 methylpropyl)phenylamine], an isomer mixture of 6-methyl-2,4 bis(methylthio)phenylene-1,3-diamine and 2-methyl-4,6-bis(methylthio)phenylene-1,3 diamine (Ethacure@ 300), diethyltoluoldiamine (DETDA, e.g. Ethacure^{®} 100 Plus), 4,4'-methylene-bis[N-(1-methylpropyl)-phenylamine] (e.g. Unilink^{®} 4200), 4,4'-methylene-bis(3-chloro-2,6-diethylaniline) (MBCDA), chlorodiethylmethylbenzolediamine, Aradur^{®} 33225, Ancamide^{®} 3419, Epilox^{®}-Hardener H 14-50.. Most preferred are DMTDA; DETDA, and mixtures therefrom.

One or more amines are contained in the amine component (B) preferably in a proportion of from 20 to 100 wt.-%, more preferably in a proportion of from 30 to 70 wt.-% and even more preferably in a proportion of from 35 to 70 wt.-%, based on the total weight of the amine component (B).

Preferably, the degree of filling of the amine component (B) is 10 to 70 wt.-%, more preferably 40 to 50 wt.-%, in each case based on the total weight of the isocyanate component (A) and the amine component (B), respectively.

The quantity ratios of the polyisocyanate and the amine of the multi-component resin system are preferably selected such that the ratio of the average NCO functionality of the polyisocyanate to the average NH functionality of the amine is between 0.3 and 2.0, preferably between 0.5 and 1.8, more preferably between 0.5 and 1.5, even more preferably between 0.7 and 1.5 and most preferably 0.7 to 1.3.

A mixture of different polyisocyanates and/or different amines can be used to adjust the rate of curing. In this case, their quantity ratios are selected such that the ratio of the averaged NCO functionality of the isocyanate mixture to the averaged NH functionality of the amine mixture is between 0.3 and 2.0, preferably between 0.5 and 1.8, more preferably between 0.5 and 1.5, even more preferably between 0.7 and 1.5 and most preferably between 0.7 and 1.3.

### Conventional Filler

The multi-component resin system material according to the present invention preferably comprises at least one conventional filler.

Inorganic fillers, in particular cements such as Portland cement or aluminate cement and other hydraulically setting inorganic substances, quartz, glass, corundum, porcelain, earthenware, barite, light spar, gypsum, talc and/or chalk and mixtures thereof are preferably used as conventional filler. The inorganic fillers can be added in the form of sands, powders, or molded bodies, preferably in the form of fibers or balls. A suitable selection of the fillers with regard to type and particle size distribution/(fiber) length can be used to control properties relevant to the application, such as rheological behavior, press-out forces, internal strength, tensile strength, pull-out forces and impact strength. Particularly suitable fillers are quartz powders, fine quartz powders and ultra-fine quartz powders that have not been surface-treated, such as Millisil@ W3, Millisil@ W6, Millisil@ W8 and Millisil@ W12, preferably Millisil@ W12. Silanized quartz powders, fine quartz powders and ultra-fine quartz powders can also be used. These are commercially available, for example, from the Silbond@ product series from Quarzwerke. The product series Silbond@ EST (modified with epoxysilane) and Silbond@ AST (treated with aminosilane) are particularly preferred. Furthermore, it is possible to use conventional filler based on aluminum oxide such as aluminum oxide ultra-fine fillers of the ASFP type from Denka, Japan (d50 = 0.3 pm) or grades such as DAW or DAM with the type designations 45 (d50 < 0.44 pm), 07 (d50 > 8.4 pm), 05 (d50 < 5.5 pm) and 03 (d50 < 4.1 pm). Moreover, the surface treated fine and ultra-fine fillers of the Aktisil AM type (treated with aminosilane, d50 = 2.2 pm) and Aktisil EM (treated with epoxysilane, d50 = 2.2 pm) from Hoffman Mineral can be used. The fillers can be used individually or in any mixture with one another.

The filler may be comprised in component (A) and/or component (B), and preferably is comprised in both component (A) and component (B).

The conventional filler may optionally be modified. For example, the filler may be modified, i.e., surface modified, with an adhesion promoter as described below.

The particle size of the conventional filler is not especially important according to the present invention. For example, the conventional filler may have a median particle size d50 of 100 µm or less, or 50 µm or less, such as 20 µm or less.

### Powdered Recycled Material

The term *"powdered recycled material*" as used in the present invention describes a solid material in powder or granular form obtained from a waste material by converting it into a valuable material by a treatment process.

Numerous materials known to the skilled person can be used as waste materials for obtaining the powdered recycled material.

The powdered recycled material is preferably selected from biogenic and non-biogenic powdered recycled material.

Patent specifications DE10 2014 103 923 A1 and DE10 2014 103 924 A1 propose the use of biogenic raw materials for the production of chemical dowels. The term biogenic raw materials refers to biomass or renewable raw materials. The use of biogenic raw materials can make a computational contribution to reducing the CFP, since the CO₂ balance of renewable raw materials is classified as negative.

However, biogenic raw materials have the decisive disadvantage that they are often used in direct competition with food. Furthermore, biogenic raw materials are sometimes obtained using ecologically unacceptable methods, such as clearing rainforests to generate cultivation areas. An example of this is sugar cane, which is further processed into polyethylene via bio-ethanol. The use of biogenic raw materials can therefore be viewed critically overall.

However, it should be noted that the biogenic material needs to be compatible with the compositions of isocyanate component (A) and/or amine component (B). For example, wood powder is not compatible with the isocyanate component (A) due to the presence of OH groups therein.

Hence, more preferably the powdered recycled material is a non-biogenic powdered recycled material, and most preferably is selected from the group consisting of concrete powder, brick powder, cured chemical dowel powder, rubber powder, waste plastic powder, fly ash, pulverized waste glass, and mixtures thereof.

For the production of the powdered recycled material, the aforementioned waste materials are subjected to a preparation process. This preparation process includes the pulverization of the waste materials, in which the waste materials are comminuted. The comminution process can be carried out, for example, by simple grinding. However, it is also possible to use drilling dust, which is a waste material produced during drilling and/or crushing of components. After pulverization, the recycled material is usually subjected to another screening process, in which coarse particles are screened out.

It is also possible to use fly ash as a powdered recycled material. Fly ash in the sense of the present invention refers to the solid residue produced during incineration. Fly ash is produced as a waste product in large quantities in thermal power plants and waste incineration plants, where it is separated from the flue gases. The chemical composition of fly ash depends strongly on the fuel used. In general, the use of fly ash from thermal power plants is preferable to fly ash from waste incineration plants. In principle, care must be taken to ensure that the composition of the fly ash does not adversely affect the reactivity, performance and storage stability of the component (A) or the component (B). Fly ash is commercially available, for example, under the brand name "*Mikrosit*".

Preferably, the powdered recycled material has a particle size of less than 1 mm, the particle size being determined by sieve analysis. Preferably, the powdered recycled material has a particle size of less than 500 µm, further preferably of less than 250 µm.

In a preferred embodiment of the present invention, the powdered recycled material is selected from the group consisting of concrete powder, brick powder, cured chemical plug flour, rubber flour, waste plastic flour, fly ash, ground or pulverized waste glass, and mixtures thereof. The above powdered recycled materials may be used singly or in a mixture of two or more of the above powdered recycled materials.

Concrete powder can be obtained by crushing and subsequent grinding of concrete. It is also possible to use drill dust or drill dust. The term concrete as used in the present invention means a building material comprising cement and aggregate. The addition of water results in a chemical setting process.

The use of concrete powder in combination with the powder of a hardened chemical dowel has proved to be particularly advantageous for the recycling rate, as this is the product obtained after appropriate reprocessing during the demolition of structures. Brick powder is obtained by grinding bricks. For the purposes of the present invention, the term "*brick*" is understood to mean all masonry bricks as defined in DIN EN 771-1. Accordingly, masonry bricks are masonry bricks which are fired from clay or other clay-containing materials with or without sand or other additives at a sufficiently high temperature to achieve a ceramic bond. The term masonry block refers to a preformed element used to make masonry. Ceramic clinker or finely ground ceramics, e.g. sanitary ceramics, can also be used.

Rubber meal can be obtained, for example, by shredding scrap tires. Scrap tires include rubber, fillers such as carbon black, plasticizers, reinforcing materials such as steel and/or nylon, and sulfur. Especially when using rubber powder, it is important to ensure that it does not contain any ingredients that delay or prevent the curing of the reaction mortar.

For the purposes of the present invention, the term used plastic means plastics that have already been used at least once in a product. In principle, type-pure plastics, type-similar plastics or also mixed plastics can be used for the production of the powdered recycled material. The term *"type-pure"* means that only a plastic from one raw material manufacturer with the same type designation is reprocessed. *"Pure grade means"* that plastics with the same designation according to DIN EN ISO 11469 or VDA 260, possibly from different raw material manufacturers, are reprocessed. *"Similar to type"* means that the plastics to be reprocessed have the same basic polymers, but differ in special properties, e.g. flame-retardant additives. *"Mixed"* means that different plastics with chemical compatibility are reprocessed. Preferably, inert thermosets or inert thermoplastics that can be pulverized are used as the waste plastic for the production of the powdered recycled material. Polymethyl methacrylate (Plexiglas), PET, polycarbonate or melamine resins are particularly preferred, with polymethyl methacrylate being especially preferred.

When waste glass is used, it is usually used as glass powder. However, it is also possible to further process the corresponding glass powder into expanded glass beads, which are then used as powdered recycled material. Expanded glass beads are produced by first cleaning waste glass and then grinding it to produce glass powder. The glass powder is mixed with binding and expanding agents and then granulated. The blowing process then takes place at temperatures of 800 to 900 °C, producing the expanded glass beads. Expanded glass beads made from waste glass are commercially available under the *"Poraver"* brand, for example.

The powdered recycled material is preferably present in the multi-component system according to the invention in a percentage by weight of 3 to 50 wt.-% based on the total weight of the multi-component system, in particular in a percentage of 5 to 50 wt.-%, more preferably in a percentage of 10 to 40 wt.-%, still more preferably 10 to 30 wt.-%.

Preferably, the percentage by weight of the powdered recycled material in the component (A) is in a range from 3 to 50 wt.-%, in particular in a range from 5 to 50 wt.-%, more preferably 20 to 45 wt.-%, based on the total weight of the component (A). Preferably, the isocyanate component (A) contains at least 6 wt.-% of powdered recycled material based on the total weight of the isocyanate component (A), preferably at least 15 wt.-%, and most preferably at least 40 wt.-%

Preferably, the percentage by weight of the powdered recycled material in the component (B) is in a range from 1 to 50 wt.-%, in particular in a range from 3 to 50 wt.-%, based on the total weight of the component (B).

As outlined above, the multi-component resin system according to the present invention further comprises a powdered recycled material. Preferably, the multi-component resin system of the present invention comprises the powdered recycled material in addition to a conventional filler. Preferably, the combined amount of powdered recycled material and conventional filler in the multi-component resin system is 30 to 60 wt.-%, based on the total weight of the multi-component resin system, preferably 35 to 60 wt.-%, more preferably 45 to 58 wt.-%, even more preferably 50 to 56 wt.-%.

Preferably, the weight ratio of the powdered recycled material to the conventional filler in the multi-component resin system according to the present invention is at least 0.01, preferably in the range of 0.01 to 0.1, more preferably in the range of from 0.05 to 0.80, even more preferably in the range of 0.1 to 0.75, and most preferably in the range of 0.25 to 0.75.

### Rheology additive

The flow properties are adjusted by adding rheology additives which, according to the invention, are used in the isocyanate component (A) and/or the amine component (B). Suitable rheology additives are: phyllosilicates such as laponites, bentones or montmorillonite, Neuburg siliceous earth, fumed silicas, polysaccharides; polyacrylate, polyurethane or polyurea thickeners and cellulose esters. Wetting agents and dispersants, surface additives, defoamers & deaerators, wax additives, adhesion promoters, viscosity reducers or process additives can also be added for optimization.

The proportion of one or more rheology additives in the isocyanate component (A) is preferably from 0.1 to 3 wt.-%, more preferably from 0.1 to 1.5 wt.-%, based on the total weight of the isocyanate component (A). The proportion of one or more rheology additives in the amine component (B) is preferably from 0.1 to 5 wt.-%, more preferably from 0.5 to 3 wt.-%, based on the total weight of the amine component (B).

In one embodiment of the multi-component resin system, the isocyanate component (A) and/or the amine component (B) contains at least one silane as an adhesion promoter.

By using a silane, the cross-linking of the borehole wall with the mortar composition is improved such that the adhesion increases in the cured state.

Suitable adhesion promoters are selected from the group of silanes that have at least one Si-bound hydrolysable group. It is not necessary for the silane to comprise a further functional group in addition to the Si-bound hydrolysable group, such as an isocyanate group or an amino group. Nevertheless, in addition to the Si-bound hydrolysable group, the silane may comprise one or more identical or different further functional groups, such as an amino, mercapto, epoxy, isocyanato, alkenyl, (meth) acryloyl, anhydrido or vinyl group. The Si-bound hydrolysable group is preferably a CC alkoxy group and very particularly preferably a methoxy or ethoxy group.

Suitable silanes are selected from the group consisting of 3-aminopropyltrialkoxysilanes such as 3-aminopropyltrimethoxysilane and 3-aminopropyltriethoxysilane; 3 glycidyloxypropyltrialkoxysilanes such as 3-glycidyloxypropyltrimethoxysilane and 3 glycidyloxypropyltriethoxysilane; glycidyloxymethyltrimethoxysilane; 3 glycidyloxypropylmethyldimethoxysilane; bis-(3-trialkoxysilylpropyl) amines such as bis (3-trimethoxysilylpropyl) amine and bis-(3-triethoxysilylpropyl) amine; 3mercaptopropyltrialkoxysilanes such as 3-mercaptopropyltrimethoxysilane and 3-mercaptopropylmethyldimethoxysilane;3-(meth)acryloyloxyalkyltrialkoxysilanes such as3-(meth)acryloyloxypropyltrimethoxysilane,3-(meth)acryloyloxypropyltriethoxysilane; 3-(meth)acryloyloxymethyltrimethoxysilane, 3-(meth)acryloyloxymethyltriethoxysilane and 3-(meth)acryloyloxypropylmethyldimethoxysilane; alkenylalkoxysilanes such as vinylalkoxysilanes, e.g. vinyltrimethoxysilane and vinyltriethoxysilane; tetraalkoxysilanes such as tetraethoxysilane, tetramethoxysilane and tetrapropoxysilane; 2-(3,4 epoxycyclohexyl)ethyltrimethoxysilane, N-2-(aminoethyl)-3-aminopropylmethyl diethoxysilane, N-2-(aminoethyl)-3-aminopropyl-triethoxysilane, N-phenyl-3-aminoethyl 3-aminopropyl trimethoxysilane and mixtures of two or more thereof.

Particularly suitable silanes are selected from the group consisting of 3-aminopropyltrialkoxysilanes, 3-glycidyloxyalkyltrialkoxysilanes, bis (3-trialkoxysilylpropyl) amines, 3-mercaptopropyltrialkoxysilanes, 3 (meth)acryloyloxyalkyltrialkoxysi lanes, alkenylalkoxysilanes, tetraalkoxysilanes and mixtures of two or more thereof.

Most particularly suitable silanes are 3-glycidoxypropyldimethoxysilane, 3 glycidoxypropyltrimethoxysilane, 3-trimethoxysilylpropyl methacrylate and vinyltrimethoxysilane.

The silane can be contained in the multi-component resin system in an amount of up to 10 wt.-%, preferably from 0.1 to 5 wt.-%, more preferably from 1.0 to 2.5 wt.-%, based on the total weight of the multi-component resin system. The silane can be contained entirely in one component, i.e., the isocyanate component (A) or the amine component (B), or be split between the two components, i.e., split between the isocyanate component (A) and the amine component (B).

### Mortar composition

The invention also relates to a mortar composition which is produced by mixing the isocyanate component (A) and the amine component (B) of the multi-component resin system.

### Use of the multi-component resin system

The multi-component resin system is preferably present in cartridges or film pouches which are characterized in that they comprise two or more separate chambers in which the isocyanate component (A) and the amine component (B) are separately arranged in a reaction-inhibiting manner.

For the use as intended of the multi-component resin system, the isocyanate component (A) and the amine component (B) are discharged out of the separate chambers and mixed in a suitable device, for example a static mixer or dissolver. The mixture of isocyanate component (A) and amine component (B) (mortar composition) is then introduced into the optionally previously cleaned borehole by means of a known injection device. The fastening element to be fastened is then inserted into the mortar composition and aligned. The reactive constituents of the isocyanate component (A) react with the amino groups of the amine component (B) by polyaddition such that the mortar composition cures under environmental conditions within a desired period of time, preferably within a few minutes or hours.

Hence, the present invention relates to the use of a mortar composition or a multi-component resin system according to the present invention for chemically fixing anchoring means in drilled holes or for structural bonding. In particular, the present invention is directed towards the use of mortar composition or a multi-component resin system according to the present invention for enhancing the bond strength of chemically fixed anchoring means in drilled holes, preferably for enhancing the bond strength of chemically fixed anchoring means in drilled holes under wet conditions.

Hence, the present invention also relates to the use of a powdered recycled material as described above for enhancing the bond strength of anchoring means chemically fixed by the mortar composition or a multi-component resin system according to the present invention in drilled holes, preferably for enhancing the bond strength of chemically fixed anchoring means mortar composition or a multi-component resin system according to the present invention in drilled holes under wet conditions.

### EXAMPLES

All ingredients of the compositions listed here are - unless otherwise stated - commercially available and were used in the commercially usual quality.

All weight percentage values given in the examples refer to the total weight of the composition described as the basis for calculation, unless otherwise stated.

### General preparation of the multi-component resin system

In a plastic bucket, the liquid components according to table 1 were mixed with a wood spatula. Then, the filler and thickener were added and by hand premixed before mixing it further into a dissolver (PC Laborsystem, volume 1L) during 8.5 min under 80 mbar reduced pressure at 3500 rpm.

All examples had a volume ratio of component A to B of 3:1 and an isocyanate:amine ratio of 1:26:1.

### Pull Out Test

To determine the bond strength in concrete, pull out experiments under the R1, B7 DD (meaning Diamond Drilled) and B8 HD (meaning Hammer Drilled)) conditions were made following the description given by the guideline ETAG 001 part 5 (Guideline For European Technical Approval Of Metal Anchors For Use In Concrete) superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in concrete plates (C20/25) with 60 mm or 72 mm embedment depth (check details in tables).

### R1: Reference boreholes:

In these experiments, threaded rods (size M12) were installed in 14 mm cleaned (2x compressed air 6 bar, 2x brushed and 2x compressed air 6 bar) hammered drilled boreholes made in dry concrete plates (C20/25) with 60 mm or 72 mm embedment depth (check details in tables). After 24 h curing time at R1, the bond strength was determined in R1 pull-out tests.

**Table 1: Compositions of multi-component resin systems (components A and B)**

| | | **V1** | **A1** | **A2** | **A3** | **A4** |
|---|---|---|---|---|---|---|
| **Component A** | | | | | | |
| HDI homopolymer | wt.-% | 28 | 28.5 | 28.5 | 28 | 28 |
| HDI biuret oligomer | wt.-% | 4.5 | 4.5 | 4.5 | 4.5 | 4.5 |
| Glymo | wt.-% | 2.2 | 2.2 | 2.2 | 2.2 | 2.2 |
| silica | wt.-% | 1.2 | 1.2 | 1.2 | 1.2 | 1.2 |
| zeolite powder | wt.-% | 3 | 3 | 3 | 3 | 3 |
| quartz powder | wt.-% | 20 | 6.2 | 0 | 20 | 20 |
| quartz sand | wt.-% | 41.1 | 37.9 | 54.6 | 0 | 41.1 |
| fly ash | wt.-% | 0 | 16.5 | 0 | 0 | 0 |
| expanded glass | wt.-% | 0 | 0 | 6 | 0 | 0 |
| brick dust | wt.-% | 0 | 0 | 0 | 41.1 | 0 |
| | | | | | | |

| **Component B** | | | | | | |
|---|---|---|---|---|---|---|
| Ethacure^{®} 300 | wt.-% | 48.6 | 48.6 | 48.6 | 48.6 | 53 |
| Ethacure^{®} 100 | wt.-% | 5 | 5 | 5 | 5 | 5 |
| quartz powder | wt.-% | 10 | 10 | 10 | 10 | 8 |
| quartz sand | wt.-% | 34.5 | 34.5 | 34.5 | 34.5 | 29.1 |
| wood powder | wt.-% | 0 | 0 | 0 | 0 | 3 |
| silica | wt.-% | 1.9 | 1.9 | 1.9 | 1.9 | 1.9 |

**Table 2: Measurement results of the multi-component resin systems**

| | | **V1** | **A1** | **V2** | **A2** | **A3** |
|---|---|---|---|---|---|---|
| filling degree | % | 56.9 | 56.7 | 56.7 | 56.9 | 55.0 |
| filling degree (A) | % | 65.3 | 64.8 | 64.8 | 65.3 | 65.3 |
| filling degree (B) | % | 46.4 | 46.4 | 46.4 | 46.4 | 42.0 |
| recycling rate | wt.-% | 0 | 7.3 | 2.7 | 18.2 | 1.3 |
| R1 | MPa | 32.5 | 35.0 | 32.0 | 31.3 | 32.4 |

The results in Tables 1 and 2 show that by using the powdered recycled materials as fillers, mortar mixes for chemical anchors can be produced that show a significantly improved recycling rate compared to conventional mortar mixes. After curing, the mortar masses show loadable failure loads.

**Table 3: Used Chemicals**

| **Abbreviation** | **Specification** | **Supplier** |
|---|---|---|
| HDI hompolymer | Low-viscous, aliphatic polyisocyanate-resin on the basis of hexamethylenediisocyanate (equivalent weight ca. 179; amount of NCO acc. to M105-ISO 11909 23,5±0,5 wt.-%, monomeric HDI acc. to M106-ISO 10283 < 0.25 wt.-%; viscosity (23 °C) acc. to M014-ISO 3219/A.3 730±100 mPas; Desmodur^{®} N 3900 | Covestro AG |
| HDI biuret oligomer | Desmodur^{®} N 3200 | Covestro AG |
| Ethacure^{®} 300 | Ethacure^{®} 300 Curative; dimethylthiotoluoldiamine 95-97 wt.-%, monomethylthiotoluoldiamine 2-3 wt.-% | Albermale Corporation |
| Ethacure^{®} 100 | Ethacure^{®} 100 Plus; diethyltoluoldiamine | Albermale Corporation |
| Glymo | Dynasylan^{®} GLYMO; 3-Glycidyloxypropyltrimethoxysilane | Evonik Resource Efficiency GmbH |
| quartz powder | Millisil^{®} W12 | Quarzwerke Frechen |
| quartz sand | P10 | Strobel |
| silica | Cab-O-Sil^{®} TS-720 | Cabot |
| brick dust | Ton Ziegelmehl Pilosith | Pilosith GmbH |
| fly ash | Mikrosit H20 | BauMineral GmbH |
| expanded glass | PORAVERO X 0,04 - 0,125 | Dennert Poraver GmbH |
| wood powder | wood powder oak | Carpentry - wood waste |

## Claims

1. A multi-component resin system comprising at least one isocyanate component (A) and at least one amine component (B),
wherein the isocyanate component (A) comprises at least one aliphatic and/or aromatic polyisocyanate having an average NCO functionality of 2 or higher,
wherein the amine component (B) comprises at least one amine reactive to isocyanate groups having an average NH functionality of 2 or higher,
**characterized in that**
the isocyanate component (A) and/or the amine component (B) comprises at least one powdered recycled material.

2. The multi-component resin system according to claim 1, **characterized in that** the isocyanate component (A) contains at least 6 wt.-% of powdered recycled material based on the total weight of the isocyanate component (A), preferably at least 15 wt.-%, and most preferably at least 40 wt.-%.

3. The multi-component resin system according to claims 1 or 2, **characterized in that** the amine component (B) comprises at least 3 wt.-% of powdered recycled material.

4. The multi-component resin system according to any of the preceding claims, **characterized in that** the powdered recycled material is selected from biogenic and non-biogenic powdered recycled material, preferably non-biogenic powdered recycled material, and most preferably is selected from the group consisting of concrete powder, brick powder, cured chemical dowel powder, rubber powder, waste plastic powder, fly ash, pulverized waste glass, and mixtures thereof.

5. The multi-component resin system according to any of the preceding claims, **characterized in that** the multi-component resin system has a recycling rate of at least 1.3 wt.-%, preferably at least 2.5 wt.-%, more preferably at least 7 wt.-%, and most preferably at least 15 wt.-%, based on the total weight of the multi-component resin system.

6. The multi-component resin system according to any of the preceding claims, **characterized in that** the total filling ratio of a mortar mass prepared by mixing the isocyanate component (A) and the amine component (B) is in a range of 25 to 85%, preferably 35 to 75%, most preferably 45 to 65%, based on the total weight of the multi-component resin system.

7. The multi-component resin system according to any of the preceding claims, **characterized in that** both the isocyanate component (A) and/or the amine component (B) comprise at least one filler and at least one rheology additive.

8. The multi-component resin system according to any of the preceding claims, **characterized in that** the multi-component resin system is free of polyaspartic acid esters.

9. The multi-component resin system according to any of the preceding claims, **characterized in that** the degree of filling of the isocyanate component (A) and the degree of filling of the amine component (B) is 10 to 70 wt.-%, preferably 40 to 50 wt.-%, in each case based on the total weight of the isocyanate component (A) and the amine component (B), respectively.

10. The multi-component resin system according to any of the preceding claims, **characterized in that** the isocyanate component (A) and/or the amine component (B) contain at least one adhesion promoter.

11. Mortar mass prepared by mixing the isocyanate component (A) and the amine component (B) of the multi-component resin system according to any of the preceding claims.

12. A method of chemically fixing structural elements in drilled holes, wherein a mortar composition according to claim 11 or a multi-component resin system according to any of claims 1 to 10 is used for chemical fixing.

13. Use of a mortar composition according to claim 11 or a multi-component resin system according to any of claims 1 to 10 for improving the CO₂ footprint of a chemical anchor.

14. Use of a mortar composition according to claim 11 or a multi-component system according to any of claims 1 to 10 for chemically fixing anchoring means in drilled holes or for structural bonding.

15. Use of a powdered recycled material in a mortar composition according to claim 11 or a multi-component system according to any of claims 1 to 10 to increase the recycling rate thereof.
